# EUROPÄISCHE PATENTANMELDUNG

(11) **EP 1 132 239 A2**
(43) Veröffentlichungstag der Anmeldung: **12.09.2001**
(21) Anmeldenummer: 01105772.6
(22) Anmeldetag: 08.03.2001
(51) Int. Cl.: B60J 7/00

(54) **Fahrzeugdach mit zwei Deckeln und Himmel für ein derartiges Fahrzeugdach**

(30) Priorität: 10.03.2000 DE 10011350
(71) Anmelder: Webasto Vehicle Systems International GmbH, 82131 Stockdorf (DE)
(72) Erfinder: Pfalzgraf, Manfred, 82211 Herrsching (DE); De Gaillard, Francois, 85390 Mouilleron en Pareds (FR); Schleicher, Bernd, 80689 München (DE); Schätzler, Walter, 82319 Starnberg (DE)
(74) Vertreter: Konnerth, Dieter Hans

(57) **Zusammenfassung**

Die Erfindung betrifft ein Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) aus seiner Schließstellung in Fahrzeuglängsrichtung in eine Offenstellung verschiebbar und beide Deckel (14, 15) wahlweise aus ihren Schließstellungen in ihre Lüfterstellungen verschwenkbar sind, wobei der vordere Deckel (14) um seine Hinterkante (16) in seine Lüfterstellung absenkbar und der hintere Deckel (15) um seine Vorderkante (19) in seine Lüfterstellung anhebbar ist.

## Beschreibung

Die Erfindung betrifft ein Fahrzeugdach mit einer in einer festen Dachhaut ausgebildeten Dachöffnung und zwei hintereinander angeordneten verstellbaren Dekkeln zum Verschließen und teilweisen Freigeben der Dachöffnung, wobei zumindest einer der Deckel aus seiner Schließstellung in Fahrzeuglängsrichtung in eine Offenstellung verschiebbar und beide Deckel wahlweise aus ihren Schließstellungen in ihre Lüfterstellungen verschwenkbar sind.

In der EP 0 447 781 A2 ist ein Schiebehebedach mit zwei Deckeln beschrieben, die in einer eine Dachöffnung verschließenden Schließstellung hintereinander angeordnet sind. Der vordere Deckel ist in Schließstellung mit seiner Hinterkante nach oben in eine Lüfterstellung ausstellbar. Beim Ausstellen des vorderen Dekkels in die Lüfterstellung wird durch eine Verstelleinrichtung die Vorderkante des hinteren Deckels zwangsweise abgesenkt. In der angehobenen Lüfterstellung des vorderen Deckels kann dieser nach hinten über den hinteren Deckel verlagert werden oder der hintere Deckel kann unter den vorderen Deckel geschoben werden, um den vorderen oder den hinteren Abschnitt der Dachöffnung freizugeben.

Die Erfindung betrifft des weiteren einen Himmel für ein Fahrzeugdach mit einer in einer festen Dachhaut ausgebildeten Dachöffnung und zwei hintereinander angeordneten verstellbaren Deckeln zum Verschließen und teilweisen Freigeben der Dachöffnung, wobei eine vordere Himmeleinheit aus einer dem vorderen Deckel zugeordneten Abdeckstellung nach hinten in eine Öffnungsstellung verschiebbar ist und eine hintere Himmeleinheit aus einer dem hinteren Deckel zugeordneten Abdeckstellung nach vorne in eine Öffnungsstellung verschiebbar ist. Die beiden vergleichsweise großflächigen Himmelelemente sind auf jeweiligen Führungsschienen geführt, die mit Höhenversatz zueinander unter der Dachhaut angeordnet sind, so daß sie gleichzeitig unter einem Dach-Mittelteil übereinander verstaut werden können. Durch die nach unten versetzte Führungsschiene wird jedoch der freie Kopfraum für Fahrzeuginsassen verringert.

Aufgabe der Erfindung ist es, ein eingangs genanntes Fahrzeugdach zu schaffen, bei dem durch unterschiedliche Deckelstellungen eine optimierte Belüftung des Fahrzeugs erzielbar ist.

Es ist eine weitere Aufgabe der Erfindung, einen Himmel für ein Fahrzeugdach der eingangs genannten Art zu schaffen, der mit weniger Raumbedarf in seiner Offenstellung unter dem Dach verstaubar ist.

Die Aufgabe wird bei dem eingangs genannten Fahrzeugdach erfindungsgemäß dadurch gelöst, daß der vordere Deckel und der hintere Deckel mit ihren jeweiligen Hinterkanten um ihre Vorderkanten in ihre Lüfterstellungen anhebbar sind. Das Anheben der Hinterkanten erfolgt zweckmäßigerweise durch Verschwenken des Deckels um seine Vorderkante oder um eine Querachse, die im weiteren Bereich um die Vorderkante des Deckels verläuft. Hier sind somit zwei Schiebehebedächer kombiniert, wobei das hintere Schiebehebedach bzw. der hintere Dekkel mittels einer Führungseinrichtung aus seiner Schließstellung nach vorne unter den vorderen Deckel verschiebbar sein kann.

Die Aufgabe wird bei dem eingangs genannten Fahrzeugdach erfindungsgemäß auch dadurch gelöst, daß der vordere Deckel um seine Hinterkante in seine Lüfterstellung absenkbar und der hintere Deckel um seine Vorderkante in seine Lüfterstellung anhebbar ist. Der vordere, absenkbare Deckel wird aufgrund der Absenkung seiner Vorderkante auch als "Frontvent" bezeichnet. Durch die abgesenkte Vorderkante am vorderen Deckel und die angehobene Hinterkante des hinteren Deckels werden zwei voneinander entfernte Belüftungsöffnungen mit verbesserter Belüftungswirkung für den gesamten Fahrzeuginnenraum bereitgestellt.

Des weiteren wird die Aufgabe bei dem eingangs genannten Fahrzeugdach erfindungsgemäß dadurch gelöst, daß der vordere Deckel um seine Vorderkante in seine Lüfterstellung anhebbar und der hintere Deckel um seine Hinterkante in seine Lüfterstellung absenkbar ist.

Schließlich besteht eine weitere Lösung der Aufgabe darin, daß bei dem eingangs genannten Fahrzeugdach erfindungsgemäß der vordere Deckel und der hintere Deckel an ihren jeweiligen Vorderkanten um ihre jeweiligen Hinterkanten in ihre Lüfterstellungen absenkbar sind.

Wenn in einer bevorzugten Ausgestaltung des Fahrzeugdaches vor dem vorderen Deckel ein ausstellbarer Windabweiser angeordnet ist, so kann durch Ausstellen des Windabweisers ein Luftzug zum Entlüften des Innenraumes erzeugt werden, wobei insbesondere bei einem vorderen Deckel, der an seiner Vorderkante abgesenkt werden kann, eine deutlich größere Be- und Entlüftungsöffnung eingestellt werden kann, wenn auch der ausgeschwenkte Windabweiser eine zusätzliche Öffnung freigibt.

Die Lösung der Aufgabe bezüglich des oben genannten Himmels besteht darin, daß die beiden Himmeleinheiten in etwa in einer gemeinsamen dachnahen Ebene aus ihren Abdeckstellungen in Richtung zu ihren Öffnungsstellungen geführt sind und daß wenigstens eine der beiden Himmeleinheiten in Längsrichtung in zumindest zwei gegeneinander verschwenkbare oder versetzbare Himmelelemente unterteilt ist und während ihrer Verschiebung in ihre Öffnungsstellung aus ihrer dachnahen Anordnung unter die andere Himmeleinheit geführt ist. Durch die Unterteilung der großflächigen Himmeleinheit in zumindest zwei oder auch mehrere in Längsrichtung kürzere Himmelelemente ist die Himmeleinheit um eine oder mehrere Querachsen derart flexibel gestaltet, daß sie in eine Stauposition überführbar und darin ablegbar ist, wobei die Führungen zur Stauposition dachnah angeordnet sein können. Auf diese Weise wird der Kopfraum für Fahrzeuginsassen nicht übermäßig eingeschränkt. Die Himmeleinheit kann einzelne, getrennte und flexibel oder schwenkbar miteinander verbundene Elemente aufweisen oder alternativ kann sie einstückig mit in Längsrichtung unterteilten Abschnitten mit unterschiedlicher Biegeflexibilität ausgebildet sein, um beispielsweise einer S-förmig gebogenen Führungsbahn folgen zu können.

Vorteilhafte Ausgestaltungen der Erfindung sind in den Unteransprüchen angegeben.

Bevorzugt ist die eine Himmeleinheit an einer im wesentlichen der Dachkontur folgenden Führung verschiebbar gelagert, die sich vom zugeordneten Deckel zu einem Himmel-Mittelteil erstreckt, und die andere Himmeleinheit ist an einer Führung verschiebbar geführt, die im Bereich des Himmel-Mittelteils unterhalb der anderen Führung verläuft.

Wenn die beiden Himmeleinheiten unabhängig voneinander verschiebbar sind, kann entsprechend den Bedürfnissen der Fahrzeuginsassen auch nur eines der Himmelelemente teilweise oder ganz geschlossen werden.

Nachfolgend werden Ausführungsbeispiele des Fahrzeugdaches und des Himmels unter Bezugnahme auf Zeichnungen näher erläutert. Es zeigt:
- Fig. 1: in einer Draufsicht ein Fahrzeugdach eines Kraftfahrzeugs;
- Fig. 2A bis 2H: in Seitenansichten in schematischer Darstellung verschiedene Fahrzeugdächer in unterschiedlichen Stellungen der Dekkel der Dachöffnungen;
- Fig. 3A bis 3D: in Seitenansichten in schematischer Darstellung verschiedene Fahrzeugdächer mit einem Windabweiser in unterschiedlichen Stellungen der Deckel der Dachöffnungen; und
- Fig. 4A bis 4C: in Seitenansichten in schematischer Darstellung einen Himmel für das Fahrzeugdach in Öffnungs- und Schließstellung des Daches und des Himmels.

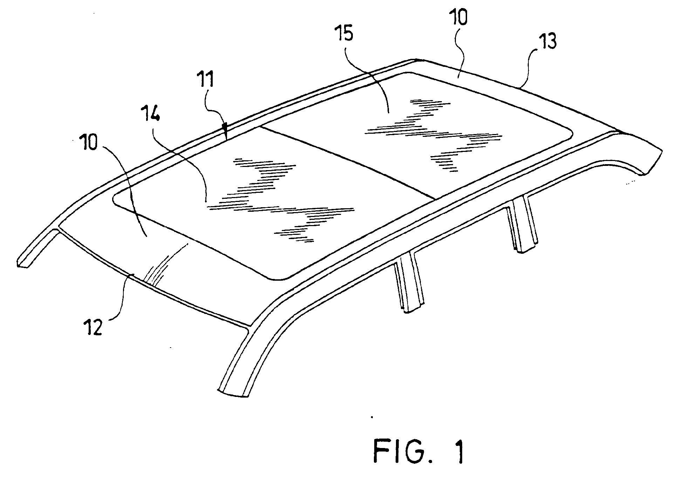

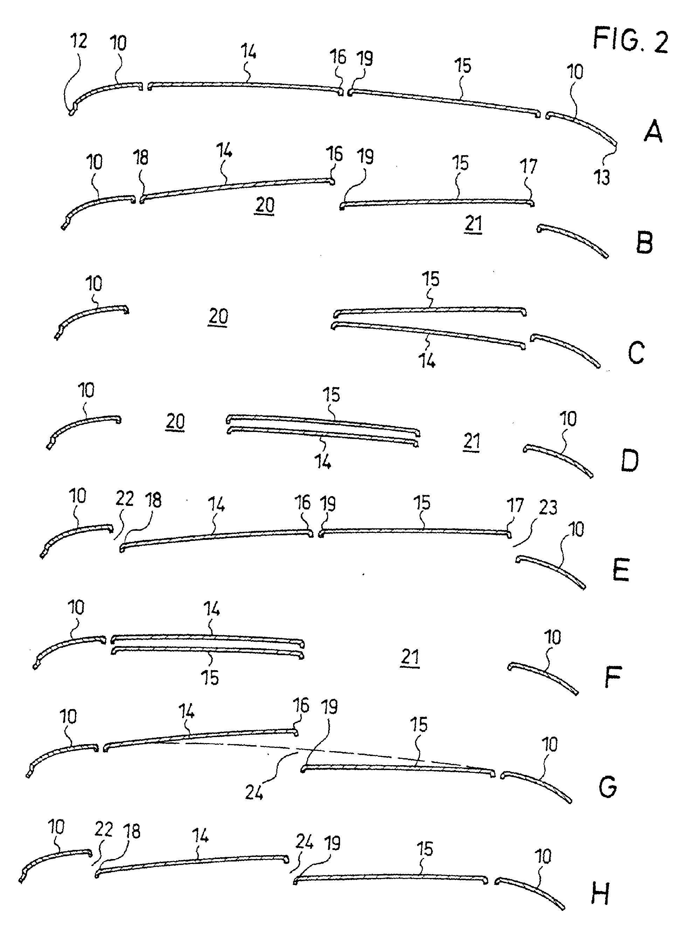

Ein Fahrzeugdach (siehe Fig. 1) weist in einer festen Dachhaut 10 eine Dachöffnung 11 auf, die sich von nahe der Vorderkante 12 der Dachhaut 10 bis nahe an die Hinterkante 13 der Dachhaut 10 erstreckt. An der Unterseite der Dachhaut 10 ist ein Rahmen (nicht dargestellt) befestigt, der beidseits der Dachöffnung 11 Führungsschienen aufweist, in denen ein vorderer Deckel 14 und ein hinterer Deckel 15 in Fahrzeuglängsrichtung verschiebbar gelagert sind. Beide Deckel 14, 15 sind ferner jeweils mit einer Ausschwenkmechanik (nicht dargestellt) versehen, durch die der vordere Deckel 14 und der hintere Deckel 15 entsprechend unterschiedlicher Ausführungsbeispiele (siehe nachfolgende Beschreibung) an der jeweiligen Deckelhinterkante 16 bzw. 17 bezüglich der Deckelvorderkante 18 bzw. 19 oder an der Deckelvorderkante 18 bzw. 19 bezüglich der Deckelhinterkante 16 bzw. 17 in Lüfterstellungen anhebbar oder absenkbar sind, wobei beide Deckel 14, 15 um ihre Vorder- oder Hinterkanten oder einer der Deckel 14, 15 um seine Vorderkante und der andere Deckel um seine Hinterkante anhebbar oder absenkbar sind. Für ihre Schwenkbewegung und ihre Verschiebebewegung entlang der Führungsschienen werden die Deckel 14, 15 jeweils von einem eigenen Antrieb angetrieben, der auf bekannte Weise als Elektromotor mit Ritzel und drucksteifen Antriebskabeln ausgebildet sein kann. Eine Verschiebemechanik (nicht dargestellt) senkt einen der Deckel 14, 15 bei seiner Längsverschiebung unter den anderen Deckel ab (siehe z. B. Fig. 2D).

In der in Fig. 2A gezeigten Schließstellung des Fahrzeugdaches verschließt der vordere Deckel 14 einen vorderen Abschnitt 20 der Dachöffnung 11, bei gleichgroßen Deckeln 14, 15 die vordere Hälfte der Dachöffnung 11, während der hintere Deckel 14 den hinteren Abschnitt 21 bzw. die hintere Hälfte verschließt.

In Fig. 2B ist eine Stellung gezeigt, in welcher die Hinterkante 16 des vorderen Deckels 14 sowie die Hinterkante 17 des hinteren Deckels 15 zu Entlüftungszwecken durch Verschwenken um die jeweiligen Vorderkanten 18 bzw. 19 nach oben angehoben sind. Dies sind die Lüfterstellungen üblicher Schiebehebedächer.

In Fig. 2C ist der vordere Deckel 14 aus seiner Schließstellung entlang seiner Führungsschienen nach hinten bewegt und dabei abgesenkt und gänzlich unter den hinteren noch in Lüfterstellung verschwenkten Deckel 15 verschoben, um die vordere Hälfte 20 der Dachöffnung 11 vollständig freizugeben.

In Fig. 2D ist der vordere Deckel 14 aus seiner Schließstellung gemäß Fig. 2A abgesenkt und entlang seiner Führungsschienen nach hinten unter den hinteren Deckel 15 bewegt, der aus seiner Schließstellung nach vorne bis in die Mitte der Dachöffnung 11 verschoben ist. Jeweils ein Teil des vorderen Abschnitts 20 und des hinteren Abschnitts 21 der Dachöffnung 11 sind somit freigelegt, wobei bei einer beispielsweise mittigen Anordnung der beiden Deckel 14 und 15 gleich große Öffnungen der Abschnitte 20 und 24 gebildet werden.

Bei einem weiteren Ausführungsbeispiel ist der vordere Deckel 14 über seinen Ausstellmechanismus an seiner Vorderkante 18 in eine Lüfterstellung absenkbar. Gemäß Fig. 2E ist eine Dachstellung einstellbar, bei der der vordere Deckel 14 an seiner Vorderkante 18 abgesenkt ist, während die Hinterkante 17 des hinteren Deckels 15 nach oben angehoben ist. Auf diese Weise ist eine Lüftungsöffnung 22 am vorderen Rand der Dachöffnung 11 und eine Lüftungsöffnung 23 am hinteren Rand der Dachöffnung 11 gebildet.

Zum vollständigen Öffnen des hinteren Abschnitts bzw. der hinteren Hälfte 21 der Dachöffnung 11 kann der hintere Deckel 15 aus seiner Schließstellung nach vorne unter den vorderen Deckel 14 verschoben werden (siehe Fig. 2F). Alternativ wird der hintere Deckel 15 an seinen Führungsschienen nach vorne verschoben, nachdem der vordere Deckel 14 abgesenkt worden ist (nicht dargestellt).

Bei dem in Fig. 2G dargestellten Ausführungsbeispiel des Fahrzeugdachs kann der hintere Deckel 15 mittels seiner Ausstellmechanik an seiner Vorderkante 19 in eine Lüfterstellung abgesenkt werden, während der vordere Deckel 14 an seiner Hinterkante 16 angehoben werden kann. In der in Fig. 2G dargestellten Stellung der beiden Deckel 14, 15 ist eine mittige Lüftungsöffnung 24 in annähernd doppelter Höhe geöffnet.

Schließlich sind bei einem weiteren Ausführungsbeispiel des Fahrzeugdaches sowohl der vordere Deckel 14 wie auch der hintere Deckel 15 an ihren Vorderkanten 18 bzw. 19 in Lüfterstellungen absenkbar (siehe Fig. 2H).

Zum vollständigen Öffnen der vorderen oder der hinteren Hälfte 20 bzw. 21 der Dachöffnung 11 oder zum teilweisen Öffnen des vorderen und/oder des hinteren Abschnitts 20 bzw. 21 der Dachöffnung 11 wird bei den beschriebenen Ausführungsbeispielen der vordere Deckel 14 nach hinten und der hintere Deckel 15 nach vorne um die entsprechende Wegstrecke verschoben, wobei der eine Dekkel an seinen Führungsschienen horizontal verschoben wird und der andere Dekkel unter den ersteren Deckel abgesenkt wird.

Die Steuerung der Antriebe der beiden Deckel 14, 15 ist derart ausgebildet, daß die Schwenkbewegungen der Deckel 14, 15 wie auch deren Verschiebebewegungen unabhängig voneinander ausgeführt werden können, wobei eine Kollision der Deckel 14, 15 während der Verschiebung durch die Anordnung der Führungsschienen ausgeschlossen ist.

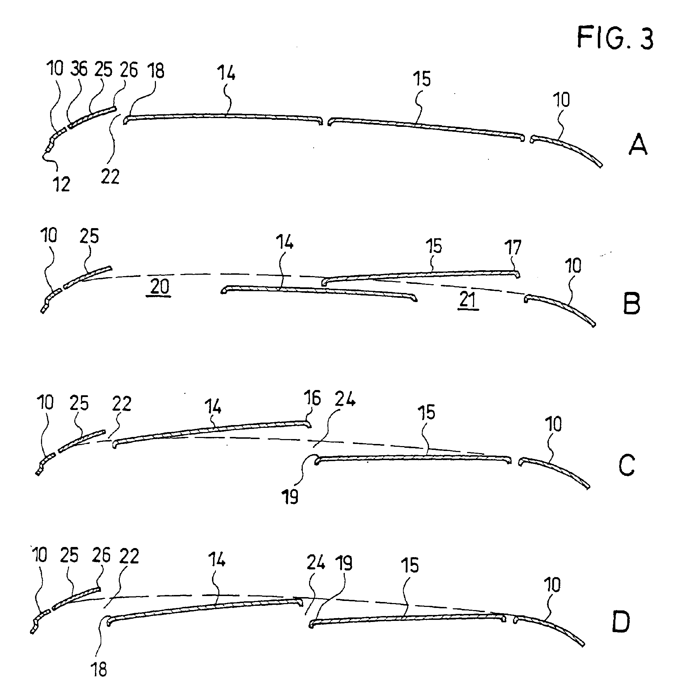

Die in den Fig. 3A bis 3D dargestellten Ausführungsbeispiele eines Fahrzeugdaches sind grundsätzlich wie die vorangehend beschriebenen Beispiele gebildet, enthalten gegenüber diesen jedoch zusätzlich einen Windabweiser 25, der zwischen der Vorderkante 12 der Dachhaut 10 und dem vorderen Deckel 14 angeordnet ist und mit seiner Hinterkante 26 um seine Vorderkante 36 nach oben schwenkbar ist. Der Windabweiser 25 kann als eine Lamelle gebildet sein, die als ein Schichtteil der Dachhaut 10 bündig auf dieser angeordnet ist und aus dieser bündigen Anordnung nach oben schwenkbar ist, so daß ein unterhalb der Lamelle verbleibender Festteil der Dachhaut 10 seine feste Anordnung beibehält. In einer alternativen Gestaltung bildet der Windabweiser 25 einen bewegbaren Teil der Dachhaut 10, der als Windabweiser-Einheit der Dachhaut 10 in seiner Gesamtheit nach oben schwenkbar ist und damit eine zusätzliche Lüftungsöffnung 22 zwischen der angehobenen Hinterkante 26 des Windabweisers 25 und der Vorderkante 18 des in seiner Schließstellung angeordneten vorderen Deckels 14 freigeben kann (siehe Fig. 3A). Der Windabweiser 25 kann bei allen in den Fig. 2A bis 2H dargestellten Fahrzeugdächern verwendet werden.

Fig. 3B zeigt beispielhaft eine Stellung der Deckel 14, 15 bei einem der Ausführungsbeispiele, in der der vordere Deckel 14 aus seiner Schließstellung nach hinten in die Mitte der Dachöffnung 11 und unter den hinteren Deckel 15 verschoben ist, während der hintere Deckel 15 an seiner Hinterkante 17 in Lüfterstellung angehoben ist.

Bei der in Fig. 3C dargestellten Variante ist der hintere Deckel 15 an seiner Vorderkante 19 in Lüfterstellung abgesenkt. Während schon bei geschlossenem vorderen Deckel 14 durch die vom angehobenen Windabweiser 25 gebildete vordere Lüftungsöffnung 22 und durch die vom hinteren Deckel 15 teilweise freigegebene Lüftungsöffnung 24 eine zugfreie und dennoch gute Belüftung besteht, wird die Belüftungswirkung noch verbessert, wenn gemäß der Darstellung der vordere Deckel 14 an seiner Hinterkante 16 in Lüfterstellung ausgeschwenkt ist, so daß die Lüftungsöffnung 24 mit ihrer größten Höhe geöffnet ist.

Die in Fig. 3D dargestellte Variante des Fahrzeugdaches enthält einen vorderen Deckel 14, der mit seiner Vorderkante 18 in eine Lüfterstellung absenkbar ist. Bei hochgeklapptem Windabweiser 25 entsteht zwischen der Hinterkante 26 des Windabweisers 25 und der gegenüber der Schließstellung (auf der strichlierten Dachlinie) abgesenkten Vorderkante 18 des vorderen Deckels 14 somit eine deutlich größere vordere Lüftungsöffnung 22, die in Verbindung mit der vom hinteren Deckel 15 freigegebenen Lüftungsöffnung 24 eine nochmals verbesserte Belüftung durch eine Luftzirkulation aus dem Innenraum durch die vordere Lüftungsöffnung 22 nach außen über den vorderen Deckel 14 und durch die mittlere Lüftungsöffnung 24 zurück in den Innenraum ermöglicht.

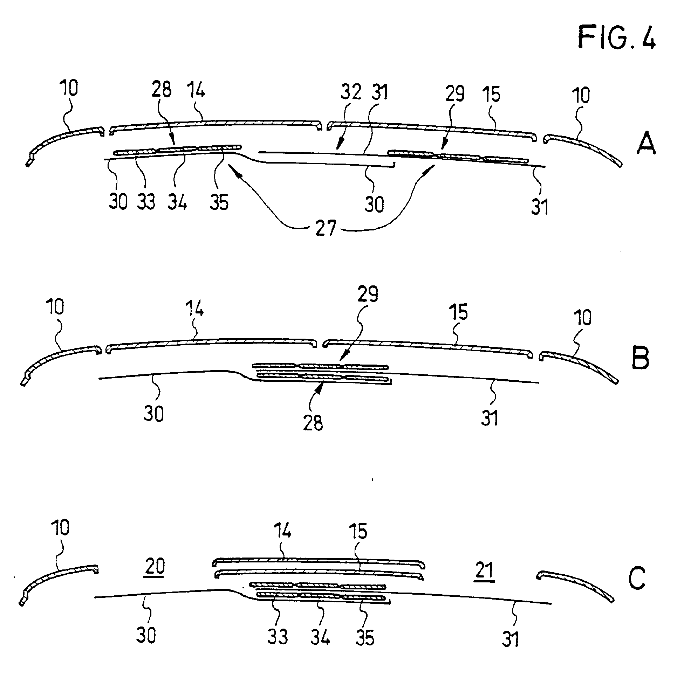

Ein in den Fig. 4A bis 4C dargestellter Himmel 27 für z. B. ein wie oben beschriebenes Fahrzeugdach enthält eine vordere Himmeleinheit 28, die dem vorderen Abschnitt 20 der Dachöffnung 11 bzw. dem vorderen insbesondere durchsichtigen Deckel 14 zugeordnet ist, und eine hintere Himmeleinheit 29, die dem hinteren Abschnitt 21 der Dachöffnung 11 bzw. dem hinteren insbesondere durchsichtigen Deckel 15 zugeordnet ist. Die beiden Himmeleinheiten 28 und 29 sind beidseits der Dachöffnung 11 auf einer jeweiligen Führungsschienen 30 und 31 verschiebbar angeordnet. Die hintere Führungsschiene 31 erstreckt sich in einer dachnahen Ebene nach vorne bis über die Hinterkante 16 des vorderen Deckels 14 hinaus. Die vordere Führungsschiene 30, die in etwa im Bereich unter dem vorderen Deckel 14 annähernd in einer Ebene mit der hinteren Führungsschiene 31 nahe am Fahrzeugdach verläuft, senkt sich zu Beginn eines Mittelabschnitts 32 des Himmels unter die hintere Führungsschiene 31 ab und erstreckt sich unterhalb von dieser in einem Abstand, der geringfügig größer ist wie die Dicke der vorderen Himmeleinheit 28. Zumindest die vordere Himmeleinheit 28 ist in Längsrichtung in mehrere, beispielsweise drei Himmelelemente 33, 34 und 35 unterteilt, die miteinander flexibel und insbesondere um eine oder mehrere Querachsen schwenkbar oder gegeneinander versetzbar verbunden sind. Durch die Unterteilung der Himmeleinheit 28 in Längsrichtung kürzere Himmelelemente 33, 34, 35 können diese aufgrund ihrer größeren Flexibilität der auf kurzer Wegstrecke S-förmig gekrümmten Bahnkurve 36 der vorderen Führungsschiene 30 folgen und in die untere Ablageebene unter dem Mittelabschnitt 32 geführt werden. Die hintere Himmeleinheit 29 wird auf ihrer Führungsbahn 31 über die vordere, unten angeordnete Himmeleinheit 28 in den Himmel-Mittelabschnitt 32 verschoben, so daß beide Himmeleinheiten 28, 29 einen vorderen und einen hinteren Abschnitt 20 und 21 der Dachöffnung 11 freigeben (siehe Fig. 4C). Die hintere Himmeleinheit 29 kann auch in zwei oder mehrere Himmelelemente unterteilt ein, wobei diese Unterteilung bei diesem Ausführungsbeispiel nicht erforderlich ist, bei dem die hintere Himmeleinheit 29 in etwa auf einer weitgehend ebenen Bahn der Führungsschiene geführt ist.

Die Ebene, in der die Führungsschienen 30, 31 im wesentlichen angeordnet sind, kann eben oder entsprechend der Form der Dachhaut gekrümmt sein.

### Bezugszeichenliste

- 10: Dachhaut
- 11: Dachöffnung
- 12: Vorderkante
- 13: Hinterkante
- 14: vorderer Deckel
- 15: hinterer Deckel
- 16: Deckelhinterkante
- 17: Deckelhinterkante
- 18: Deckelvorderkante
- 19: Deckelvorderkante
- 20: vorderer Abschnitt
- 21: hinterer Abschnitt
- 22: vordere Lüftungsöffnung
- 23: hintere Lüftungsöffnung
- 24: mittlere Lüftungsöffnung
- 25: Windabweiser
- 26: Hinterkante
- 27: Himmel
- 28: vordere Himmeleinheit
- 29: hintere Himmeleinheit
- 30: Führungsschiene
- 31: Führungsschiene
- 32: Himmel-Mittelabschnitt
- 33: Himmelelement
- 34: Himmelelement
- 35: Himmelelement
- 36: Vorderkante

## Patentansprüche

1. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) aus seiner Schließstellung in Fahrzeuglängsrichtung in eine Offenstellung verschiebbar und beide Deckel (14, 15) wahlweise aus ihren Schließstellungen in ihre Lüfterstellungen verschwenkbar sind,
**dadurch gekennzeichnet,**
**daß** der vordere Deckel (14) und der hintere Deckel (15) mit ihren jeweiligen Hinterkanten (16 bzw. 17) um ihre Vorderkanten (18, 19) in ihre Lüfterstellungen anhebbar sind.

2. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) aus seiner Schließstellung in Fahrzeuglängsrichtung in eine Offenstellung verschiebbar und beide Deckel (14, 15) wahlweise aus ihren Schließstellungen in ihre Lüfterstellungen verschwenkbar sind,
**dadurch gekennzeichnet,**
**daß** der vordere Deckel (14) um seine Hinterkante (16) in seine Lüfterstellung absenkbar und der hintere Deckel (15) um seine Vorderkante (19) in seine Lüfterstellung anhebbar ist.

3. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) aus seiner Schließstellung in Fahrzeuglängsrichtung in eine Offenstellung verschiebbar und beide Deckel (14, 15) wahlweise aus ihren Schließstellungen in ihre Lüfterstellungen verschwenkbar sind,
**dadurch gekennzeichnet,**
**daß** der vordere Deckel (14) um seine Vorderkante (18) in seine Lüfterstellung anhebbar und der hintere Deckel (15) um seine Hinterkante (17) in seine Lüfterstellung absenkbar ist.

4. Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei zumindest einer der Deckel (14, 15) aus seiner Schließstellung in Fahrzeuglängsrichtung in eine Offenstellung verschiebbar und beide Deckel (14, 15) wahlweise aus ihren Schließstellungen in ihre Lüfterstellungen verschwenkbar sind,
**dadurch gekennzeichnet,**
**daß** der vordere Deckel (14) und der hintere Deckel (15) an ihren jeweiligen Vorderkanten (18, 19) um ihre jeweiligen Hinterkanten (16, 17) in ihre Lüfterstellungen absenkbar sind.

5. Fahrzeugdach nach einem der Ansprüche 1 bis 4,
dadurch gekennzeichnet, daß der vordere Deckel (14) und/oder der hintere Deckel (15) in Zwischenstellungen verschiebbar sind, in denen ein vorderer Abschnitt (20) und/oder ein hinterer Abschnitt (21) der Dachöffnung (11) freigelegt sind.

6. Fahrzeugdach nach einem der Ansprüche 1 bis 5,
dadurch gekennzeichnet, daß der vordere Deckel (14) und der hintere Deckel (15) in etwa in der Mitte der Dachöffnung (11) in Übereinanderlage positionierbar sind.

7. Fahrzeugdach nach einem der Ansprüche 1 bis 6,
dadurch gekennzeichnet, daß vor dem vorderen Deckel (14) ein ausstellbarer Windabweiser (25) angeordnet ist.

8. Himmel für ein Fahrzeugdach mit einer in einer festen Dachhaut (10) ausgebildeten Dachöffnung (11) und zwei hintereinander angeordneten verstellbaren Deckeln (14, 15) zum Verschließen und teilweisen Freigeben der Dachöffnung (11), wobei eine vordere Himmeleinheit (28) aus einer dem vorderen Deckel (14) zugeordneten Abdeckstellung nach hinten in eine Öffnungsstellung verschiebbar ist und eine hintere Himmeleinheit (29) aus einer dem hinteren Deckel (15) zugeordneten Abdeckstellung nach vorne in eine Öffnungsstellung verschiebbar ist, insbesondere für ein Fahrzeugdach nach einem der Ansprüche 1 bis 7,
**dadurch gekennzeichnet,**
**daß** die beiden Himmeleinheiten (28, 29) in etwa in einer gemeinsamen dachnahen Ebene (30, 31) aus ihren Abdeckstellungen in Richtung zu ihren Öffnungsstellungen geführt sind und daß wenigstens eine der beiden Himmeleinheiten (28) in Längsrichtung in zumindest zwei gegeneinander verschwenkbare oder versetzbare Himmelelemente (33, 34, 35) unterteilt ist und während ihrer Verschiebung in ihre Öffnungsstellung aus ihrer dachnahen Anordnung unter die andere Himmeleinheit (29) geführt ist.

9. Himmel nach Anspruch 8,
dadurch gekennzeichnet, daß die eine Himmeleinheit (29) an einer im wesentlichen der Dachkontur folgenden Führung (31) verschiebbar gelagert ist, die sich vom zugeordneten Deckel (14) zu einem Himmel-Mittelabschnitt (32) erstreckt, und daß die andere Himmeleinheit (28) an einer Führung (30) verschiebbar geführt ist, die im Bereich des Himmel-Mittelabschnitts (32) unterhalb der anderen Führung verläuft.

10. Himmel nach Anspruch 8 oder 9,
dadurch gekennzeichnet, daß die beiden Himmeleinheiten (28, 29) unabhängig voneinander verschiebbar sind.
